# EUROPEAN PATENT APPLICATION

(11) **EP 4 852 346 A1**
(43) Date of publication of application: **09.12.2026**
(21) Application number: 25180589.1
(22) Date of filing: 03.06.2025
(51) Int. Cl.: H04B 10/27, H04Q 11/00

(54) **UPSTREAM MONITORING IN A PASSIVE OPTICAL NETWORK**

(71) Applicant: Nokia Solutions and Networks Oy, 02610 Espoo (FI)
(72) Inventor: Tsiaflakis, Paschalis, 2018 Antwerpen (BE); Maes, Jochen, 2018 Antwerpen (BE)
(74) Representative: Ipsilon Belgium

(57) **Abstract**

Example embodiments describe an optical line terminal (110), OLT, configured to communicate with optical network units (130, 140, 150), ONUs, within a passive optical network, PON; wherein the OLT comprises a dynamic bandwidth assignment, DBA, engine (111) configured to dynamically assign bandwidths to the ONUs by allocating upstream transmission opportunities (133, 134, 142, 143, 154, 155) within upstream frames (181 - 183); wherein the DBA engine is further configured to assign, during a monitoring interval (204), excess upstream bandwidth to at least one target ONU to monitor a condition of at least one PON segment along the optical signal path between the at least one target ONU and the OLT by a sensing circuitry (203) configured to monitor upstream optical signals during the monitoring interval.

## Description

### Field of the Invention

Various example embodiments relate to monitoring or sensing in a passive optical network, PON, in particular upstream monitoring.

### Background of the Invention

Sensing or monitoring in passive optical networks, PONs, refers to the use of the existing fibre optic infrastructure to monitor and detect physical changes and events along the fibre network of the PON. This can include monitoring the health of the fibre infrastructure itself, e.g. detecting faults or cuts along the fibre, as well as monitoring environmental changes, e.g. detecting vibrations, temperature changes or other environmental factors. This can provide real-time monitoring and diagnostics to ensure the reliability and performance of the PON and may enable new applications. Sensing or monitoring of PONs can thus enhance the ability to maintain and optimize networks, provide early warnings of potential issues, and support new applications, all while leveraging the existing fibre infrastructure.

A problem with most sensing or monitoring solutions for PONs is that they rely on a continuous data transmission and, thus, are only suitable for downstream monitoring as the upstream fibre medium is typically shared in time between the optical network units, ONUs. Downstream monitoring of PONs has the problem that a sensing circuitry or device needs to be provided at each ONU, or at least at each ONU for which sensing is desired. This can be costly and difficult to deploy across the vast number of active ONUs.

As such, upstream monitoring of a PON is desirable as only a single sensing circuitry or sensing device can be provided at the optical line terminal, OLT. However, it is a challenge to monitor specific ONUs without impacting the quality of service, QoS, and bandwidth efficiency of the data transmissions.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to provide upstream monitoring of a passive optical network, PON, without impacting the quality of service, QoS or bandwidth efficiency of the upstream data transmissions.

This object is achieved, according to a first example aspect of the present disclosure, by an optical line terminal, OLT, configured to communicate with optical network units, ONUs, within a passive optical network, PON; wherein the OLT comprises a dynamic bandwidth assignment, DBA, engine configured to dynamically assign bandwidths to the ONUs by allocating upstream transmission opportunities within upstream frames; wherein the DBA engine is further configured to assign, during a monitoring interval, excess upstream bandwidth to at least one target ONU to monitor a condition of at least one PON segment along the optical signal path between the at least one target ONU and the OLT by a sensing circuitry configured to monitor upstream optical signals during the monitoring interval.

The at least one target ONU is the ONU for which upstream monitoring is performed. This allows determining a condition of a PON segment along the optical signal path between the target ONU and the OLT. The PON segment may, for example, be a portion of the feeder fibre, a portion of the drop fibre, the splitter/multiplexer, a transceiver function within the target ONU or within the OLT, or any point-to-point segment of fibre optically connecting the target ONU and the OLT. The monitoring interval refers to a time span during which it is desired to monitor the at least one target ONU, i.e. to monitor a condition of a PON segment along the optical path between the target ONU and the OLT. The monitoring interval may, for example, be a whole number of upstream frames, or a fraction of an upstream frame.

The sensing circuitry monitors the upstream optical signal arriving at the OLT by sampling the upstream optical signal. The sensing circuitry is thus configured to sample the upstream optical signal arriving at the OLT. This sampling may be performed at regular intervals or irregular intervals. The sensing circuitry may be a separate sensing device or may be integrated within the OLT. The sensing circuitry may, for example, be configured to tap off a small amount of optical power from the upstream optical signal for further processing to determine the condition of a PON segment. The sensing circuitry may, for example, be a polarisation sensor, an optical time-domain reflectometer, OTDR, a distributed acoustic sensor, DAS, a power sensor, or may extract other signal metrics from the upstream optical signal such as eye diagram, extinction ratio, tolerance to bit errors, channel state information and wavelength drift. The sensing circuitry may, but need not, limit its sampling to occur during the monitoring interval. In other words, the sensing circuitry may also continuously sample the upstream optical signal. It will further be apparent that the target ONU may change over time, e.g. successive target ONUs may be defined by a predetermined schedule.

The excess upstream bandwidth refers to the excess of the total upstream PON bandwidth that can be freely allocated without negatively impacting the quality of service, QoS, of the upstream transmissions. In other words, the excess upstream bandwidth is the portion of the total available upstream bandwidth in the PON that remains after fulfilling the bandwidth demands or (estimated) traffic loads of all ONUs or transmission containers, T-CONTs, within the ONUs and subject to the traffic descriptor constraints.

The DBA engine is configured to assign, during the monitoring interval, excess upstream bandwidth to the at least one target ONU to monitor a condition of at least one PON segment by the sensing circuitry. Assigning excess upstream bandwidth is achieved by allocating transmission opportunities or bursts to the at least one target ONU within upstream frames during the monitoring interval. As such, substantially larger upstream transmission opportunities are assigned to the at least one target ONU by the DBA engine without negatively interfering with the optimized dynamic bandwidth assignment for upstream data transmission.

In doing so, a majority of the samples taken by the sensing circuitry during the monitoring interval fall within an upstream burst allocated to the at least one target ONU, as the excess upstream bandwidth is typically large relative to the upstream bandwidth demand or upstream traffic load in PONs. This allows obtaining high-quality measurements of the upstream optical signal transmitted by the target ONU without synchronization between the sensing circuitry and the upstream transmission opportunities allocated to the target ONU by the DBA engine.

As the excess upstream bandwidth in PONs is typically large, many of the bursts allocated to the target ONU are sufficiently large to obtain high-quality monitoring samples. It is an advantage that assigning excess upstream bandwidth limits negatively affecting the upstream transmission opportunities determined by the DBA engine for regular upstream data transmissions. As such, upstream monitoring of a specific target ONU is enabled without impacting the QoS or bandwidth efficiency.

This further allows the sensor circuitry to operate in a continuous measurement mode during the monitoring interval, i.e. sampling at regular intervals. This has the advantage that it can make computations for determining the condition of a PON segment, e.g. a fast Fourier transform, FFT, or a short-time Fourier transform, STFT, easier and less computationally expensive as the sensing samples are distributed evenly in time.

According to an example embodiment, excess bandwidth may be assigned to the at least one target ONU such that, during the monitoring interval, at least half of the aggregate bandwidth of the respective upstream frames is allocated to the at least one target ONU.

According to an example embodiment, the DBA engine may further be configured to assign, during the monitoring interval, the entire excess upstream bandwidth to the at least one target ONU.

According to an example embodiment, the OLT may further comprise a cooperative dynamic bandwidth assignment, CO-DBA, engine configured to allocate an upstream transmission opportunity to the at least one target ONU that is synchronized with a monitoring event of the sensing circuitry.

The CO-DBA engine may be communicatively coupled to the sensing circuitry or a controller by means of a cooperative transport interface, CTI, protocol. The CO-DBA engine may thus be configured to utilize forward-looking information on monitoring events of the sensing circuitry to allocate upstream transmission opportunities to the target ONU that are synchronized with the measurements or samples taken by the sensor circuitry during these monitoring events. These upstream transmission opportunities may further be referred to as sensing bursts or monitoring bursts. The CO-DBA engine may be configured to prioritize sensing bursts over upstream bursts for regular upstream data communication allocated to non-target ONUs. This has the advantage that the monitoring performance is improved as the sensing burst is synchronized with measurements or samples taken by the sensing circuitry..

According to an example embodiment, the CO-DBA engine may further be configured to prioritize upstream transmission opportunities for upstream data communication allocated to non-target ONUs by the DBA engine.

The upstream bursts allocated by the DBA engine are thus given priority over the allocation of sensing bursts. In other words, the sensing bursts may only be allocated to the target ONU if there are no overlapping upstream bursts allocated to non-target ONUs. This has the advantage that upstream traffic is less impacted by the sensing bursts.

According to an example embodiment, the CO-DBA engine may further be configured to stop prioritizing upstream transmission opportunities for upstream data communication allocated to non-target ONUs after a predetermined portion of the monitoring interval has elapsed without successfully monitoring the condition of the at least one PON segment.

In other words, during a first portion of a monitoring interval, the upstream bursts allocated to non-target ONUs for data communication are given priority over the allocation of the sensing bursts. If this fails to result in a successful determination of the PON segment condition by a certain moment in time, e.g. due to high upstream traffic demand, the CO-DBA engine may switch to prioritizing the sensing bursts during a second portion of the monitoring interval at the cost of some upstream bursts allocated to the non-target ONUs. This has the advantage that successful monitoring of a PON segment can be guaranteed by a certain moment in time.

According to an example embodiment, the DBA engine may further be configured to assign, during a first portion of the monitoring interval, a portion of the excess upstream bandwidth to the at least one target ONU; and wherein the OLT further comprises a CO-DBA engine configured to allocate, if successfully monitoring the condition of the at least one PON segment during the first portion of the monitoring interval fails, upstream transmission opportunities to the at least one target ONU that are synchronized with a monitoring event of the sensing circuitry during a second portion of the monitoring interval.

This allows to attempt successful monitoring of a PON segment during the first portion of the monitoring interval without synchronization between the measurements of the sensing circuitry and the upstream bursts, while still guaranteeing that a successful monitoring of the PON segment can be achieved by a certain moment in time by switching to strict synchronization during the second portion of the monitoring interval.

According to an example embodiment, assigning excess upstream bandwidth to the at least one target ONU may comprise allocating one or more upstream transmission opportunities to the at least one target ONU in addition to the upstream transmission opportunities allocated by the DBA engine to satisfy the current upstream bandwidth demands of the ONUs, and/or extending one or more upstream transmission opportunities allocated to the at least one target ONU by the DBA engine.

In other words, assigning a portion of the excess upstream bandwidth to the at least one target ONU may include allocating additional upstream transmission opportunities to the target ONU and/or extending upstream transmission opportunities already allocated to the target ONU by the DBA engine.

According to an example embodiment, the monitored condition of the at least one PON segment may comprise a physical change in the at least one PON segment or an environmental change surrounding the at least one PON segment.

A physical change in a PON segment may, for example, include a fault, a cut, mechanical degradation, optical degradation, or a bend within an optical fibre. An environmental change surrounding a PON segment may, for example, include temperature changes, wind, fire, vibrations caused by an earthquake, vibrations caused by ground works, or vibrations caused by transport (cars, trains, metro, airplanes).

According to an example embodiment, the OLT may further comprise a monitoring controller configured to determine the monitoring interval and the at least one target ONU based on a selected monitoring use case.

The use cases may be configured by an operator of the PON. The use case may define which ONUs are to be monitored, i.e. the target ONUs, and during which time windows these ONUs are to be monitored, i.e. the corresponding monitoring intervals. For example, a monitoring interval between 0 - 1 ms may be selected for a first ONU, a monitoring interval between 2 - 3 ms may be selected for a second ONU, and a monitoring interval between 4 - 6 ms may be selected for a third ONU. The monitoring controller may thus be configured to dynamically select the monitoring interval depending on the target ONU. As another example, the monitoring controller may select the same, larger, monitor interval for all target ONUs, with the objective to monitor each target ONU e.g. every hour or every day.

According to an example embodiment, the DBA engine may further be configured to convert information defining the monitoring interval and the at least one target ONU received from the monitoring controller into bandwidth maps.

According to an example embodiment, the CO-DBA engine may further be configured to convert information defining the monitoring interval and the at least one target ONU received from the monitoring controller into bandwidth maps.

The DBA engine and/or the CO-DBA engine may further be configured to include auxiliary information into the bandwidth maps in addition to the location of the upstream transmission opportunities assigned to the ONUs. This auxiliary information may, for example, indicate whether an upstream transmission opportunity may be assigned for sensing or for regular upstream traffic. This can allow guiding or directing the target ONU to transmit a particular data pattern for monitoring.

According to a second example aspect, the invention relates to a system for upstream monitoring of passive optical network, PON, segments comprising an optical line terminal, OLT, according to the first aspect configured to communicate with optical network units, ONUs; wherein the OLT comprises a dynamic bandwidth assignment, DBA, engine configured to dynamically assign bandwidths to the ONUs by allocating upstream transmission opportunities within upstream frames; wherein the DBA engine is further configured to assign, during a monitoring interval, excess upstream bandwidth to at least one target ONU; and wherein the system further comprises a sensing circuitry configured to monitor upstream optical signals during the monitoring interval; and wherein the excess upstream bandwidth is assigned to the at least one target ONU to monitor, by the sensing circuitry, a condition of at least one PON segment along the optical signal path between the at least one target ONU and the OLT.

According to an example embodiment, the system may further comprise a monitoring controller configured to determine the monitoring interval and the at least one target ONU based on a selected monitoring use case.

According to an example embodiment, the monitoring controller may be comprised within the sensing circuitry, within the OLT, or within a centralized network control and management system.

A centralized network control management system may refer to a system configured to provision, monitor, and dynamically control one or more access network elements via programmable interfaces, e.g. Nokia's Altiplano platform. The network controller may communicate with the access network elements over a network configuration protocol, e.g. NETCONF, using a data modelling language, e.g. YANG.

According to an example embodiment, the sensing circuitry may further be configured to receive information defining the monitoring interval from the monitoring controller.

According to an example embodiment, the system may further be configured to process the monitored upstream optical signals to obtain the condition of the at least one PON segment along the optical signal path between the at least one target ONU and the OLT.

This processing may be performed by a circuitry within the OLT, a circuitry within the sensing circuitry, or by a centralized network control and management system. This processing may, for example, include splitting the upstream optical signal into two orthogonal polarizations, detecting these polarizations, digitizing the detected signals, deriving the frequency spectrum, and tracking changes in the state-of-polarization, SOP, of the optical signal. Alternatively, the processing may include processing the digital information obtained by the sensing circuitry for determining the condition of a PON segment, e.g. extracting variability of parameters such as SOP, received power, extinction ratio; or correlating the obtained digital information with digital information obtained during preceding monitoring intervals; or applying classification or root cause analysis, potentially aided by machine learning techniques. The processing may also include enhancing the digital information obtained by the sensing circuitry to improve the signal-to-noise ratio of the sensing. This can be achieved by time domain methods to filter out samples from non-targeted ONUs, frequency domain or spectral filtering methods, windowing techniques, statistical processing (outlier detection and removal, median filtering), machine learning approaches, signal separation techniques, adaptive processing, or correlation methods.

According to an example embodiment, the sensing circuitry may further be configured to derive the state-of-polarization, SOP, of the monitored upstream optical signals.

According to an example embodiment, the system may be further configured to discard monitoring results acquired during a period when upstream traffic demand within the PON exceeds a threshold.

Discarding monitoring results may include discarding samples of the upstream optical signal taken during the monitoring interval, i.e. before processing the samples, and discarding the condition of a PON segment determined from such samples, i.e. after processing the samples. This allows discarding the monitored condition of a PON segment acquired during periods of peak upstream traffic, which can be unreliable as the available excess bandwidth may be insufficient for robust upstream monitoring.

According to a third example aspect, the invention relates to a method for upstream monitoring of segments within a passive optical network, PON, comprising an optical line terminal, OLT, configured to communicate with optical network units, ONUs; wherein the OLT comprises a dynamic bandwidth assignment, DBA, engine configured to dynamically assign bandwidths to the ONUs by allocating upstream transmission opportunities within upstream frames; the method comprising, during a monitoring interval:
- by the DBA engine, assigning excess upstream bandwidth to at least one target ONU to monitor a condition of at least one PON segment along the optical signal path between the at least one target ONU and the OLT; and
- by a sensing circuitry, monitoring the upstream optical signal.

### Brief Description of the Drawings

Fig. 1 shows a schematic block diagram of an example passive optical network;
Fig. 2 shows an example embodiment of an optical line terminal, OLT, configured to schedule upstream traffic for upstream monitoring within a PON without impacting the quality of service, QoS, or bandwidth efficiency of upstream data transmissions;
Fig. 3 shows an example of a signal that depends on the state of polarization, SOP, of an upstream optical signal arriving at the OLT during successive upstream frames comprising bursts allocated to a target ONU and bursts allocated to non-targeted ONUs;
Fig. 4 shows an example embodiment of the OLT further comprising a cooperative dynamic bandwidth assignment, CO-DBA, engine;
Fig. 5 shows example upstream burst schedules assigned by a DBA engine according to embodiments; and
Fig. 6 shows example steps of a method for upstream monitoring of PON segments.

### Detailed Description of Embodiment(s)

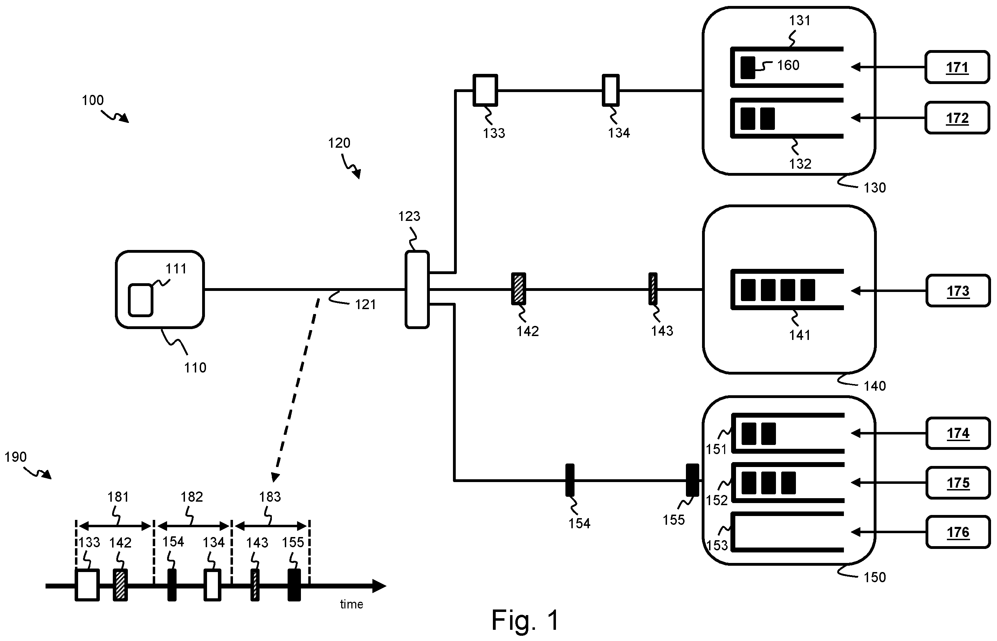

Fig. 1 shows a schematic block diagram of an example passive optical network, PON 100. The PON comprises an optical line terminal, OLT, 110 connected to a plurality of optical network units, ONUs, 130, 140, 150 via an optical distribution network, ODN 120. The ODN 120 may have a tree structure comprising an optical feeder fibre 121, one or more passive optical splitters/multiplexors 123, and a plurality of optical distribution fibres or drop fibres that connect the splitter/multiplexor 123 to the respective ONUs 130, 140, 150. In the downstream, the passive optical splitter/multiplexor 123 splits an optical signal coming from the OLT 110 into lower power optical signals for the connected ONUs 130, 140, 150, while in the upstream direction, the passive optical splitter/multiplexor 123 multiplexes the optical burst signals coming from the connected ONUs 130, 140, 150 into an optical burst signal for the OLT 110. In this example, the OLT 110 is connected to three ONUs 130, 140, 150, however, the OLT 110 may be connected to fewer or more ONUs.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or time- and wavelength-division multiplexing, TWDM.

In time-division multiplexing, TDM, the telecommunication medium 121 is shared in time between the ONUs 130, 140, 150 in the upstream. To this end, transmission opportunities 133, 134, 142, 143, 154, 155 are allocated to the respective ONUs 130, 140, 150 during which the respective ONUs 130, 140, 150 are allowed to transmit data to the OLT 110. Transmission opportunities may also be referred to as timeslots or bursts. For example, ONU 140 is allowed to transmit upstream data during the transmission opportunities 142, 143.

The respective ONUs 130, 140, 150 comprise one or more traffic-bearing entities 131, 132, 141, 151, 152, 153 where data packets 160 originating from a connected service 171 - 176 or application await their turn to be transmitted to the OLT 110. The one or more traffic-bearing entities 131, 132, 141, 151, 152, 153 may be transmission containers, also referred to as T-CONTs. Transmission containers are ONU-objects that represent a group of logical connections within an ONU 130, 140, 150 that appear as a single entity for the purpose of upstream bandwidth assignment in a passive optical network.

The transmitted data during a transmission opportunity 133, 134, 142, 143, 154, 155 may thus originate from traffic-bearing entities 131, 132, 141, 151, 152, 153 within the associated ONUs 130, 140, 150. A respective traffic-bearing entity 131, 141, 151 is allowed to transmit data to the OLT 110 during a dedicated transmission opportunity 133, 134, 142, 143, 154, 155 that may recur in time, i.e. during a repeating timeslot. In between consecutive transmission opportunities associated with a certain traffic-bearing entity, e.g. 154 and 155, one or more non-overlapping transmission opportunities associated with different transmission queues may be allocated, e.g. 134 and 143.

The transmission opportunities 133, 134, 142, 143, 144, 154, 155 may be allocated by dynamic bandwidth assignment, DBA, sometimes also referred to as dynamic bandwidth allocation. To this end, the OLT 110 may comprise a DBA engine 111 or DBA functional module that executes a DBA algorithm. The DBA engine 111 may determine or estimate a traffic load of the traffic-bearing entities 131, 132, 141, 151, 152, 153 by collecting in-band status reports of buffer occupancies, by monitoring consumed bandwidths of upstream frames, or both. The DBA algorithm may implement a DBA model that defines how the assigned bandwidth for the traffic-bearing entities 131, 132, 141, 151, 152, 153 is to be determined, e.g. according to the reference DBA model of the ITU-T G.9807.1 standard. The DBA engine 111 typically also determines the size and timing of the upstream transmission opportunities 133, 134, 142, 143, 154, 155 such that the determined bandwidths are allocated to the traffic-bearing entities 131, 132, 141, 151, 152, 153. In other words, the allocations are mapped onto transmit opportunities.

The bandwidth demands may be determined or predicted based on a reported buffer occupancy, e.g. dynamic bandwidth report upstream, DBRu, according to the ITU-T G.9807.1 standard. Alternatively, the bandwidth demands may be determined based on monitored traffic from a respective ONU or T-CONT, e.g. based on the amount of payload data transmitted during one or more transmission opportunities, and/or idle data. The DBA engine converts the allocated transmission opportunities into bandwidth maps for the respective upstream frames, i.e. on a per frame basis. The bandwidth map for the next upstream frame is then communicated to the ONUs within the FS header of the downstream frames.

The existing fibre optic infrastructure illustrated in Fig. 1 can be used to monitor and detect physical changes and events along the fibre network 120 of the PON 100. This is typically referred to as sensing or monitoring a PON. Sensing or monitoring can include monitoring the health of the fibre infrastructure itself, e.g. detecting faults or cuts along the fibre, as well as monitoring environmental changes surrounding the fibre infrastructure, e.g. detecting vibrations, temperature changes, other environmental factors, or monitoring the health of the active equipment such as the transceivers. This can provide real-time monitoring and diagnostics to ensure the reliability and performance of the PON and may enable new applications. Sensing or monitoring of PONs can thus enhance the ability to maintain and optimize networks, provide early warnings of potential issues, and support new applications, all while leveraging the existing fibre infrastructure.

A problem with most sensing or monitoring solutions for PONs is that they rely on a continuous data transmission and, thus, are limited to downstream monitoring as the upstream fibre medium is typically shared in time between the optical network units, ONUs. Downstream monitoring of PONs has the problem that a sensing circuitry or sensing device needs to be provided at each ONU 130, 140, 150, or at least at each ONU for which sensing is desired. This can be costly and difficult to deploy across the vast number of currently active ONUs.

As such, upstream monitoring of a PON 100 is desirable because only a single sensing circuitry or sensing device can be provided at a central upstream location, e.g. at the optical line terminal, OLT, 110. However, enabling monitoring of the drop fibres between the splitter 123 and the respective ONUs 130, 140, 150 based on measurements of upstream signals on the feeder fibre 121 would require tight synchronization between the sensing circuitry and the scheduled upstream bursts 133, 134, 142, 143, 154, 155 to identify which ONU is being monitored or sensed. Even if a sensing circuitry can be synchronized with the upstream bursts 133, 134, 142, 143, 154, 155 allocated by a DBA engine 111, these bursts may be too short to enable reliable upstream monitoring.

Typical DBA engines 111 avoid scheduling long bursts 133, 134, 142, 143, 154, 155 to individual ONUs 130, 140, 150 unless they have a high traffic demand. This is a challenge because it limits upstream monitoring of a PON with DBA to periods when the ONU of interest experiences high upstream traffic demand. On the other hand, dictating upstream bursts specifically for monitoring, e.g. bursts of sufficient length that are synchronized with the sampling of a sensing circuitry, can interfere with the DBA burst schedule 190 that attempts to meet the current upstream traffic demand. Hence, imposing sensing or monitoring bursts for target ONUs can disrupt normal DBA operation, resulting in a degradation of quality of service, QoS. For example, allocating a burst specifically for monitoring to an ONU of interest can result in bandwidth inefficiency if that ONU has no data to transmit during that burst while other ONUs do. This inefficiency can cause data packets 160 to sit longer in a queue, increasing latency and jitter, and impacting throughput.

It is thus a challenge to provide upstream monitoring in a PON 100 of specific ONUs 130, 140, 150 without impacting the quality of service, QoS, or bandwidth efficiency.

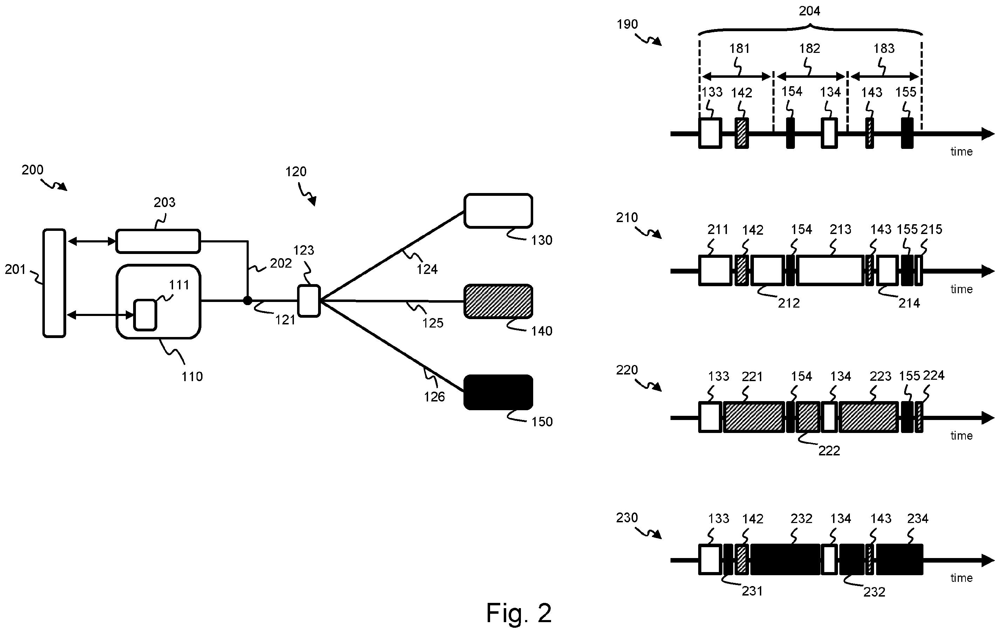

Fig. 2 shows an example embodiment of an optical line terminal, OLT 110, configured to schedule upstream traffic 210, 220, 230 in a way that enables upstream monitoring within the PON 200 without impacting the quality of service, QoS, or bandwidth efficiency of the upstream data transmissions. OLT 110 comprises a DBA engine 111 configured to dynamically assign bandwidths to the ONUs 130, 140, 150 by allocating upstream transmission opportunities 133, 134, 142, 143, 154, 155 within upstream frames 181 - 183, as described in relation to Fig. 1. The DBA engine 111 is further configured to assign, during a monitoring interval 204, excess upstream bandwidth to at least one target ONU 130, 140, 150.

The target ONU refers to the ONU 130, 140, 150 for which upstream monitoring is performed during the monitoring interval 204. The target ONU may be any of the ONUs 130, 140, 150 within the PON 200. It will further be apparent that the target ONU may change over time, e.g. successive target ONUs may be defined by a predetermined schedule. The other ONUs may be referred to as non-target ONUs or non-targeted ONUs. The monitoring interval 204 refers to a time span during which it is desired to monitor the target ONU, e.g. a number of successive upstream frames 181 - 183. The excess upstream bandwidth refers to the portion of the total upstream PON bandwidth that can be freely allocated without negatively impacting the quality of service, QoS, of the upstream transmissions between the ONUs 130, 140, 150 and the OLT 110. In other words, the excess upstream bandwidth is the portion of the total available upstream bandwidth in the PON that remains after fulfilling the bandwidth demands or (estimated) traffic load of all ONUs 130, 140, 150 subject to traffic descriptor constraints. The traffic descriptors may pose constraints on bandwidth, latency, and/or jitter. For example, the ITU-T G.9807.1 standard defines the offered traffic load for a T-CONT and the traffic descriptors such as the minimum, assured and maximum bandwidths. The excess upstream bandwidth can be the portion of the total available upstream bandwidth in the PON that remains after assigning the offered traffic loads for each T-CONT, subject to the minimum, the maximum and the assured bandwidths constraints of each T-CONT. The DBA engine 111 may be configured to determine the excess upstream bandwidth. This can, for example, be achieved by means of a proportional integral derivative, PID, -based controller based on the estimated bandwidth demands or traffic loads.

The amount of, or portion of, the excess upstream bandwidth that is assigned to the target ONU by the DBA engine 111 is at least sufficient to monitor a condition of a PON segment along the optical signal path between the target ONU 130, 140, 150 and the OLT 110 by a sensing circuitry 203. A PON segment may, for example, be a portion of the feeder fibre 121, a portion of the drop fibre 124 - 126, the splitter/multiplexer 123, a transceiver function within the target ONU or within the OLT 110, the ONU or OLT themselves, or any point-to-point segment of fibre optically connecting the target ONU 130, 140, 150 and the OLT 110. The monitored condition of the PON segment may comprise a physical change in the PON segment, e.g. a fault, a cut, mechanical degradation, optical degradation, or a bend within an optical fibre. Alternatively or complementary, the monitored condition of the PON segment may comprise an environmental change surrounding the PON segment, e.g. temperature changes, wind, fire, vibrations caused by an earthquake, vibrations caused by ground works, or vibrations caused by transport (cars, trains, metro, airplanes).

The sensing circuitry 203 is configured to monitor upstream optical signals, at least during the monitoring interval 204. The sensing circuitry 203 monitors the upstream optical signal arriving at the OLT 110 by sampling the upstream optical signal at regular intervals. The sensing circuitry 203 is thus configured to sample the upstream optical signal arriving at the OLT 110, i.e. the optical signal travelling along the feeder fibre 121. Sensing circuitry 203 may be a separate sensing device or may be integrated within the OLT 110. The sensing circuitry 203 may, for example, be configured to tap off 202 a small amount of optical power from the upstream optical signal for further processing to determine the condition of a PON segment between the OLT 110 and the target ONU 130, 140, 150. The sensing circuitry 203 may, for example, be a polarisation sensor, an optical time-domain reflectometer, OTDR, a distributed acoustic sensor, DAS, or a power sensor, or may extract other signal metrics from the upstream optical signal such as eye diagram, extinction ratio, tolerance to bit errors, channel state information and wavelength drift. The sensing circuitry 203 may further be configured to derive a state of polarization, SOP, from the sampled upstream optical signals. The sensing circuitry 203 may, but need not, limit its sampling to the monitoring interval 204. In other words, the sensing circuitry may continuously sample the upstream optical signal. The sensing circuitry 203 may sample the upstream optical signal at regular intervals or at irregular intervals.

Assigning excess upstream bandwidth is achieved by allocating transmission opportunities or bursts to the target ONU within upstream frames 181 - 183 during the monitoring interval 204. Fig. 2 shows the upstream bursts 190 allocated to ONUs 130, 140, 150 to meet their current estimated upstream traffic demand, i.e. the bursts a DBA engine would assign to meet the upstream traffic loads. Fig. 2 further shows an example of the scheduled upstream bursts 210 when ONU 130 is selected as the target ONU, i.e. when it is desired to monitor ONU 130 during the monitoring interval 204. In this example 210, the DBA engine 111 assigns the entire or majority of the excess upstream bandwidth to the target ONU 130 by allocating bursts 211 - 215. This may be achieved by allocating additional bursts to the target ONU 130 relative to schedule 190, i.e. bursts 212, 214, and 215. Alternatively or complementary, this may be achieved by extending bursts already allocated to the target ONU 130 in schedule 190, i.e. burst 133 can be extended to burst 211 and burst 134 can be extended to burst 213. Fig. 2 further shows an example of the scheduled upstream bursts 220 when ONU 140 is selected as the target ONU during monitoring interval 204, and an example of the scheduled upstream bursts 230 when ONU 150 is selected as the target ONU during monitoring interval 204.

In doing so, substantially larger upstream transmission opportunities 211 - 215, 221 - 224, 231 - 234, are assigned to the target ONU 130, 140, 150 by the DBA engine 111 without interfering with the dynamic bandwidth assignment for upstream data transmission based on the current estimated upstream traffic demands, i.e. schedule 190. This results in a majority of the samples taken by the sensing circuitry 203 falling within an upstream burst allocated to the target ONU during the monitoring interval 204, as the available excess upstream bandwidth is typically large relative to the upstream bandwidth demand in PONs. In other words, a majority of the measurements taken by the sensing circuitry 203 will measure an upstream signal transmitted by the target ONU, regardless of when the sensing circuitry 203 samples the upstream optical signal. The DBA engine 111 is thus configured to assign, during monitoring interval 204, excess upstream bandwidth to at least one target ONU 130, 140, 150 such that a majority of the monitoring performed by sensing circuitry 203 during the monitoring interval occurs during upstream transmission opportunities allocated to the at least one target ONU to monitor a condition of at least one PON segment along the optical signal path between the at least one target ONU and the OLT.

This allows obtaining high-quality measurements of the upstream optical signal transmitted by the target ONU without synchronization between the sensing circuitry 203 and the upstream transmission opportunities 210, 220, 230 allocated to the target ONU by the DBA engine 111.

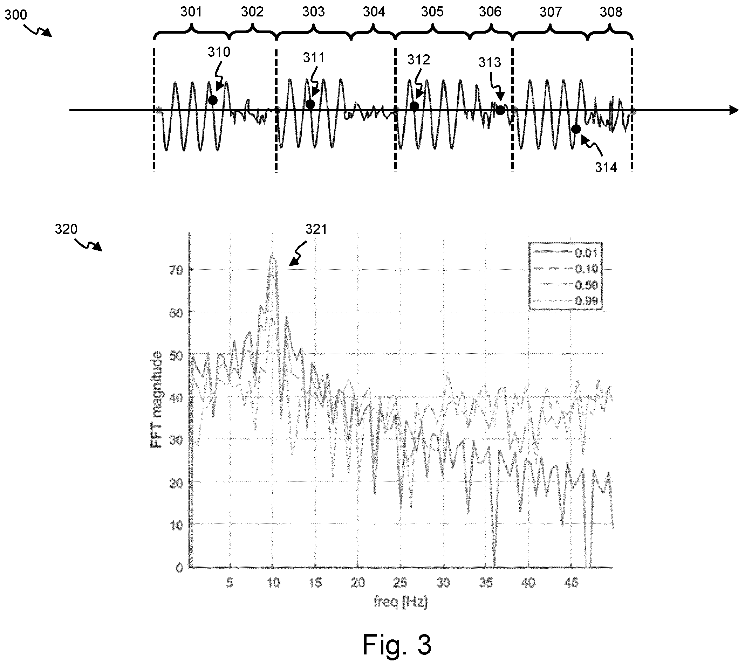

Fig. 3 shows an example of a signal that depends on the measured state of polarization, SOP, of the upstream optical signal arriving at the OLT during successive upstream frames 300 each comprising bursts 301, 303, 305, 307 allocated to a target ONU and bursts 302, 304, 306, 308 allocated to non-targeted ONUs. As illustrated in Fig. 3, the bursts 301, 303, 305, 307 of the target ONU show a sine-vibrating signal which can, for example, be caused by vibrations surrounding the drop fibre between a splitter and the target ONU, and as such resulting in a frequency component in the signal that depends on the SOP. The bursts 302, 304, 306, 308 of the non-targeted ONUs do not show any frequency in the signal that depends on the SOP because the corresponding drop fibres are not subjected to vibrations at this frequency. The sensing circuitry may sample the upstream optical signal at points 310 - 314 in time, i.e. at regular time intervals. Fig. 3 clearly shows that there is no synchronization between the sampling 310 - 314 of the sensing circuitry and the target ONU bursts 301, 303, 305, 307, e.g. in the third upstream frame a sample 313 is taken during a burst 306 associated with one of the non-targeted ONUs.

Fig. 3 further shows the fast Fourier transform, FFT, magnitude 320 of the signal that depends on the SOP to illustrate the detection of a 10Hz frequency of the signal for the sampling 310 - 314 at a different ratio of non-targeted ONU bursts and targeted ONU bursts. For a 1% ratio, 99% of the frame is filled with a burst of the target ONU, and so the 10Hz peak 321 in the SOP is clearly detected. But even for a ratio of 10% and 50%, the frequency peak detection is still good. This shows that in case there is no synchronization of bursts 301, 303, 305, 307 and sensing sampling 310 - 314 the disclosed invention operates robustly. In case of high % ratios, the FFT magnitude of the signal may be a superposition of frequency content of the target ONU and non-targeted ONUs. However, by considering the time slot allocations or bandwidth assignments (of DBA or CO-DBA) combined with processing, the FFT magnitude of the individual ONUs can be derived.

This shows that the excess upstream bandwidth that is assigned to the target ONU to monitor the condition of the PON segment may be less than the entire available excess upstream bandwidth, as described in relation to Fig. 2. A portion of the excess bandwidth may be assigned to the target ONU such that, during the monitoring interval, at least half of the aggregate bandwidth of the respective upstream frames is allocated to the at least one target ONU.

Returning to Fig. 2, the OLT 110 and the sensing circuitry 203 may further be part of a system for upstream monitoring of PON segments. Such a system may thus comprise the OLT 110 and the sensing circuitry 203. The system may further comprise a monitoring controller 201 configured to determine the monitoring interval 204 and the target ONU 130, 140, 150 based on a selected monitoring use case. Such a use case may, for example, be configured by an operator of the PON 200. The use case may define which ONUs 130, 140, 150 are to be monitored, i.e. the target ONUs, and during which time windows these ONUs are to be monitored, i.e. the corresponding monitoring intervals 204. For example, a monitoring interval between 0 - 1 ms may be selected for ONU 130, a monitoring interval between 2-3 ms may be selected for ONU 140, and a monitoring interval between 4 - 6 ms may be selected for ONU 150. Another example is that the ONUs connected to the OLT are sequentially monitored for a monitoring interval of 10 seconds in a loop. The monitoring controller 201 may thus be configured to dynamically select the monitoring interval 204 depending on the target ONU. The monitoring controller 201 may be included within a centralized network control and management system, i.e. at a centralized location. A centralized network control management system may refer to a system configured to provision, monitor, and dynamically control one or more access network elements via programmable interfaces, e.g. Nokia's Altiplano platform. Alternatively, the monitoring controller 201 may be a separate circuitry, may be a circuitry comprised within the OLT 110 (not shown in Fig. 2), or may be comprised within the sensing circuitry 203 (not shown in Fig. 2).

The monitoring controller 201 may further be communicatively coupled to the DBA engine 111 and/or the sensing circuitry 203. This coupling can, for example, be achieved through ethernet, I2C, an OLT on-board API, CTI or some other communication means. One example of an (Ethernet) networking based coupling is a network configuration protocol, e.g. NETCONF, using a data modelling language, e.g. YANG. The sensing circuitry 203 may receive information defining the monitoring interval 204 from the monitoring controller 201. Thus, the monitoring controller 201 may determine the interval 204 for a target ONU 130, 140, 150 based on a use-case and then transmit the selected interval 204 to the sensing circuitry 203 and/or the DBA engine 111.

The system may further be configured to process the sampled upstream optical signals to obtain the condition of a PON segment along the optical signal path between the target ONU 130, 140, 150 and the OLT 110. This processing may be performed by a circuitry within the OLT 110, by a circuitry within the sensing circuitry 203, or by a centralized network control and management system. This processing may, for example, include splitting the upstream optical signal into two orthogonal polarizations, detecting these polarizations, digitizing the detected signals, deriving the frequency spectrum, and tracking changes in the state-of-polarization, SOP, of the optical signal. Alternatively, the processing may include processing the digital information obtained by the sensing circuitry for determining the condition of the PON segment, e.g. extracting variability of parameters such as SOP, received power, extinction ratio; or correlating the obtained digital information with digital information obtained during preceding monitoring intervals; or applying classification or root cause analysis, potentially aided by machine learning techniques.

Typical upstream traffic in a PON is relatively low with occasional peaks in upstream traffic. During these occasional peaks, the monitoring according to the present disclosure may temporarily be unreliable as insufficient excess upstream bandwidth is available to be allocated to the target ONU for monitoring purposes. As such, the system may further be configured to discard the determined condition of a PON segment based on samples of the upstream optical signal taken during such occasional peaks, i.e. during a period when upstream traffic demand within the PON exceeds a threshold. Alternatively, the system may be configured to discard the measurements by the sensing circuitry 203, i.e. the sample, taken during such a peak in upstream traffic.

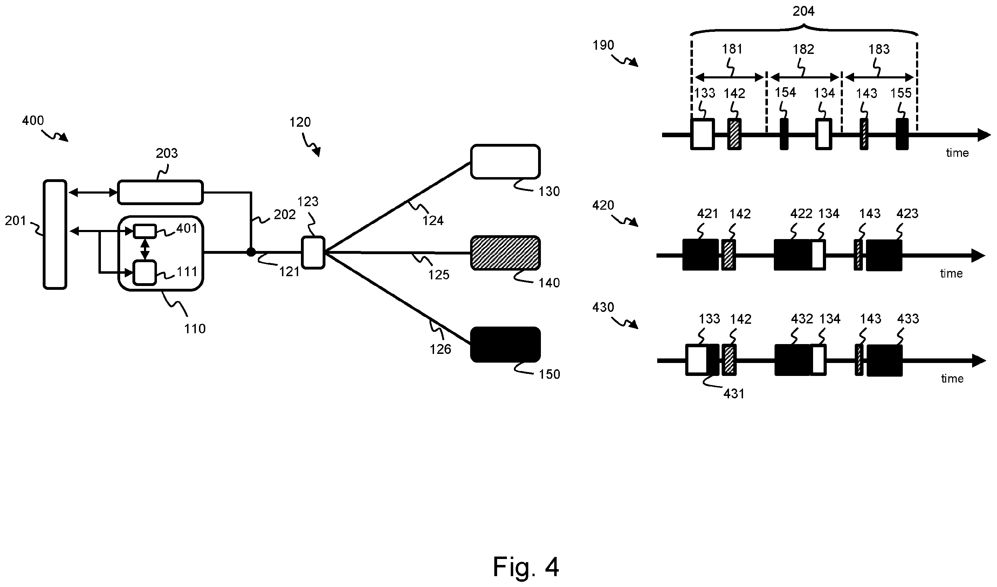

Fig. 4 shows an other example embodiment of the OLT 110, further comprising a cooperative dynamic bandwidth assignment, CO-DBA, engine 401. The CO-DBA engine 401 may be communicatively coupled to the sensing circuitry 203 and/or monitoring controller 201 by means of a cooperative transport interface, CTI, protocol. The CO-DBA engine 401 may be configured to allocate upstream bursts to the target ONU 130, 140, 150 that are respectively synchronized with monitoring events of the sensing circuitry. In other words, contrary to the solution described in relation to Fig. 2 - 3, the CO-DBA engine 401 may thus use forward-looking information on the monitoring events of the sensing circuitry 203 to dictate sensing bursts, i.e. upstream transmission opportunities that are synchronized with the sampling of the sensing circuitry 203. This is illustrated in schedule 420, which shows sensing bursts 421, 422, 423 allocated to target ONU 150 regardless of the bursts 133, 134, 142, 154, 155 already scheduled by the DBA engine 111 to meet current estimated traffic demands. The CO-DBA engine 401 may thus be configured to prioritize the sensing bursts allocated to a target ONU 150 over upstream bursts for upstream data communication allocated to non-target ONUs 130, 140, e.g. sensing burst 421 being scheduled at the cost of burst 133. This has the advantage that the monitoring performance is improved (e.g. better sensing signal-to-noise ratio (SNR)) as the sensing circuitry only takes samples when the target ONU is active.

Alternatively, the CO-DBA engine may be configured to prioritize upstream transmission opportunities for upstream data communication allocated to non-target ONUs. This is illustrated in schedule 430, which shows that burst 133 is granted priority over sensing burst 431, which should have matched burst 421. In other words, the sensing bursts 431 - 433 may only be allocated to the target ONU 150 if there are no overlapping upstream bursts 133, 134, 142, 143 allocated to non-target ONUs 130, 140. This has the advantage that upstream traffic is less impacted by the sensing bursts. It must be noted that, while the allocations to non-target ONUs in 420 and 430 are illustrated to be placed in the same time position, the time position of the allocations may alternatively be modified as long as Quality of Service, such as latency and jitter, is satisfied.

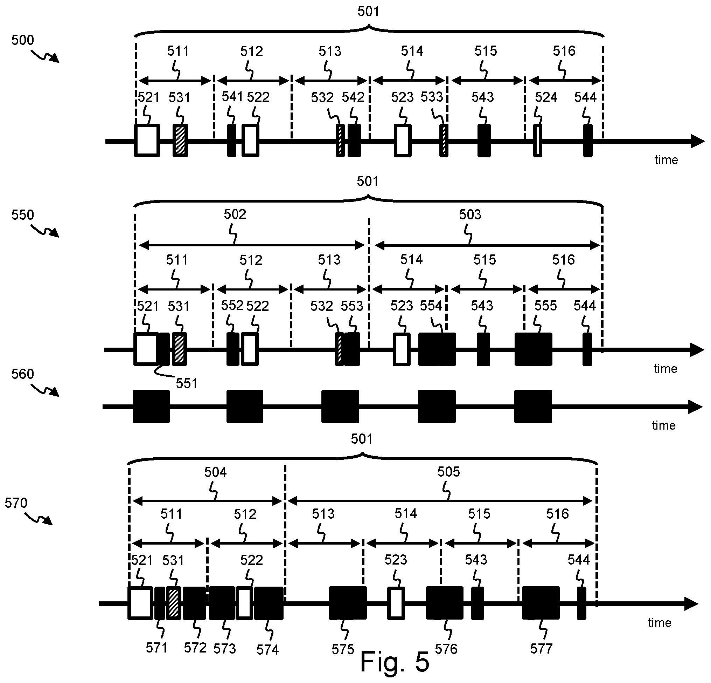

Fig. 5 shows an example upstream burst schedule 500, sometimes also referred to as a bandwidth map, assigned by a typical DBA engine in a PON. The upstream bursts 521 - 524, 531 - 533, and 541 - 544 are allocated to three respective ONUs (illustrated by the different fill of the bursts in Fig. 5). The bursts are allocated over six successive upstream frames 511 - 516. One of the ONUs is the target ONU for monitoring (illustrated by black filled bursts in Fig. 5). Fig. 5 further shows an example 560 schedule of the sampling events of the sensing circuitry. Fig. 5 further shows an example upstream burst schedule 550 allocated by a DBA engine and CO-DBA engine according to embodiments. As described in relation to Fig. 4, the CO-DBA engine 401 may be configured to prioritize bursts for upstream data transmission 521 - 524, 531 - 533, 541 - 544. However, in this example, the CO-DBA engine may be configured to only prioritize the bursts for upstream data transmissions during a first portion 502 of the monitoring interval 501. After the first portion 502 of the monitoring interval 501 has elapsed without successfully monitoring the condition of a PON segment, the CO-DBA engine may stop prioritizing the data bursts and start prioritizing the sensing bursts during a second period 503. In other words, the CO-DBA engine may operate as described in relation to schedule 430 of Fig. 4 during a first portion 502 of the monitoring interval 501 and may operate as described in relation to schedule 420 of Fig. 4 during the second portion 503 of the interval 501. Portion 502 may be predetermined in length or may be dynamic in length, e.g. depending on the selected monitoring use case. This has the advantage that successful monitoring of a PON segment can be guaranteed by a certain moment in time by switching to the prioritizing of sensing bursts, i.e. by switching to the operation of portion 503.

Fig. 5 further shows another example upstream burst schedule 570 allocated by a DBA engine and a CO-DBA engine according to embodiments. During a first portion 504 of the monitoring interval 501, the DBA engine may assign the entire excess upstream bandwidth to the target ONU by allocating bursts 571 - 574. In other words, the DBA engine may operate as described in relation to Fig. 2 during the first portion 504. If successful monitoring of the condition of a PON segment fails during the first portion 504, the CO-DBA engine may interfere by allocating sensing bursts 575 - 577 regardless of the bursts for upstream data transmission 532, 533, 524 assigned to non-target ONUs. In other words, the CO-DBA engine may operate as described in relation to schedule 420 of Fig. 4 during the second portion 505 of the monitoring interval 501. This allows to attempt successful monitoring of a PON segment during the first portion 504 of the monitoring interval 501 without synchronization between the measurements of the sensing circuitry and the upstream bursts, while still guaranteeing that a successful monitoring of the PON segment can be achieved by a certain moment in time by switching to strict synchronization during the second portion 505 of the monitoring interval 501. In the example shown, the higher priority to the sensing burst 575 over the data transmission 532, results in the transmission opportunity 532 not being allocated. Alternatively, if Quality of Service allows, (a fraction of) the data transmission, can be allocated to occur slightly before or slightly after the sensing burst 575.

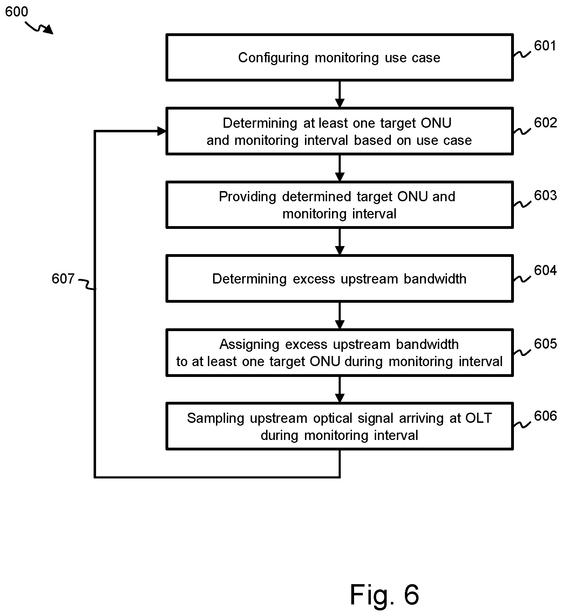

Fig. 6 shows example steps 600 of a method for upstream monitoring of segments within a passive optical network, PON. In a first step 601, a monitoring use case may be configured or selected. This can, for example, be performed by an operator of the PON. The use case may be provided to a monitoring controller. In a following step 602, the target ONU and the monitoring interval may be determined by the monitoring controller based on the selected use case. In a next step 603, information on the selected target ONU and corresponding monitoring interval may be provided to the DBA engine, CO-DBA engine, and/or sensing circuitry. In a following step 604, the excess upstream bandwidth may be determined. A following step 605 comprises, by the DBA engine, assigning excess upstream bandwidth to the target ONU to monitor a condition of a PON segment along the optical signal path between the target ONU and the OLT. The method further comprises, in step 606, monitoring the upstream optical signal by the sensing circuitry during the monitoring interval. Steps 605 and 606 are thus performed during a monitoring interval for a corresponding target ONU. Upon completion of the monitoring interval, the method may return 607 to step 602 and determine a next target ONU and/or next monitoring interval for monitoring according to the selected use case.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. An optical line terminal (110), OLT, configured to communicate with optical network units (130, 140, 150), ONUs, within a passive optical network, PON; wherein the OLT comprises a dynamic bandwidth assignment, DBA, engine (111) configured to dynamically assign bandwidths to the ONUs by allocating upstream transmission opportunities (133, 134, 142, 143, 154, 155) within upstream frames (181 - 183); wherein the DBA engine is further configured to assign, during a monitoring interval (204), excess upstream bandwidth to at least one target ONU to monitor a condition of at least one PON segment along the optical signal path between the at least one target ONU and the OLT by a sensing circuitry (203) configured to monitor upstream optical signals during the monitoring interval.

2. The OLT according to claim 1, wherein excess bandwidth is assigned to the at least one target ONU such that, during the monitoring interval (204), at least half of the aggregate bandwidth of the respective upstream frames (181, 182, 183) is allocated to the at least one target ONU.

3. The OLT according to any of the preceding claims, wherein the DBA engine is further configured to assign, during the monitoring interval, the entire excess upstream bandwidth to the at least one target ONU.

4. The OLT according to claim 1, further comprising a cooperative dynamic bandwidth assignment, CO-DBA, engine (401) configured to allocate an upstream transmission opportunity (421, 422, 423) to the at least one target ONU (150) that is synchronized with a monitoring event of the sensing circuitry (203).

5. The OLT according to claim 4, wherein the CO-DBA engine (401) is further configured to prioritize upstream transmission opportunities (133, 134, 142, 143) for upstream data communication allocated to non-target ONUs (130, 140) by the DBA engine.

6. The OLT according to claim 5, wherein the CO-DBA engine (401) is further configured to stop prioritizing upstream transmission opportunities (521, 522, 523, 524, 531, 532, 533, 541, 542, 543, 544) for upstream data communication allocated to non-target ONUs (130, 140) after a predetermined portion (502) of the monitoring interval (501) has elapsed without successfully monitoring the condition of the at least one PON segment.

7. The OLT according to claim 1, wherein the DBA engine (111) is further configured to assign, during a first portion (504) of the monitoring interval (501), a portion of the excess upstream bandwidth to the at least one target ONU (571 - 574); and wherein the OLT further comprises a CO-DBA engine configured to allocate, if successfully monitoring the condition of the at least one PON segment during the first portion (504) of the monitoring interval fails, upstream transmission opportunities (575 - 577) to the at least one target ONU that are synchronized with a monitoring event (560) of the sensing circuitry during a second portion (505) of the monitoring interval (501).

8. The OLT according to any of the preceding claims, wherein assigning excess upstream bandwidth to the at least one target ONU comprises allocating one or more upstream transmission opportunities to the at least one target ONU in addition to the upstream transmission opportunities allocated by the DBA engine to satisfy the current upstream bandwidth demands of the ONUs, and/or extending one or more upstream transmission opportunities allocated to the at least one target ONU by the DBA engine.

9. The OLT according to any of the preceding claims, wherein the monitored condition of the at least one PON segment comprises a physical change in the at least one PON segment or an environmental change surrounding the at least one PON segment.

10. The OLT according to any of the preceding claims, further comprising a monitoring controller (201) configured to determine the monitoring interval (204, 501) and the at least one target ONU (130, 140, 150) based on a selected monitoring use case.

11. A system for upstream monitoring of passive optical network, PON, segments comprising an optical line terminal (110), OLT, according to any of claims 1 - 10 configured to communicate with optical network units (130, 140, 150), ONUs; wherein the OLT comprises a dynamic bandwidth assignment, DBA, engine (111) configured to dynamically assign bandwidths to the ONUs by allocating upstream transmission opportunities (133, 134, 142, 143, 154, 155) within upstream frames (181 - 183); wherein the DBA engine is further configured to assign, during a monitoring interval (204), excess upstream bandwidth to at least one target ONU; and wherein the system further comprises a sensing circuitry (203) configured to monitor upstream optical signals during the monitoring interval (204); and wherein the excess upstream bandwidth is assigned to the at least one target ONU to monitor, by the sensing circuitry, a condition of at least one PON segment along the optical signal path between the at least one target ONU and the OLT.

12. The system according to claim 11, further comprising a monitoring controller (201) configured to determine the monitoring interval (204, 501) and the at least one target ONU (130, 140, 150) based on a selected monitoring use case.

13. The system according to any of claims 11 - 12, further configured to process the monitored upstream optical signals to obtain the condition of the at least one PON segment along the optical signal path between the at least one target ONU and the OLT.

14. The system according to any of claims 11 - 13, further configured to discard monitoring results acquired during a period when upstream traffic demand within the PON exceeds a threshold.

15. A method for upstream monitoring of segments within a passive optical network, PON, comprising an optical line terminal (110), OLT, configured to communicate with optical network units (130, 140, 150), ONUs; wherein the OLT comprises a dynamic bandwidth assignment, DBA, engine (111) configured to dynamically assign bandwidths to the ONUs by allocating upstream transmission opportunities (133, 134, 142, 143, 154, 155) within upstream frames (181, 182, 183); the method comprising, during a monitoring interval (204, 501):
- by the DBA engine (111), assigning (605) excess upstream bandwidth to at least one target ONU to monitor a condition of at least one PON segment along the optical signal path between the at least one target ONU and the OLT; and
- by a sensing circuitry (203), monitoring (606) the upstream optical signal.
